# EUROPÄISCHE PATENTANMELDUNG

(11) **EP 3 208 912 A1**
(43) Veröffentlichungstag der Anmeldung: **23.08.2017**
(21) Anmeldenummer: 16156440.6
(22) Anmeldetag: 19.02.2016
(51) Int. Cl.: H02K 1/27

(54) **LÄUFER**

(71) Anmelder: Siemens Aktiengesellschaft, 80333 München (DE)
(72) Erfinder: Gessner, Rudolf, 97616 Bad Neustadt (DE); Grossmann, Udo, 97640 Oberstreu (DE); Heim, Bruno, 97633 Grosseibstadt (DE); Kraus, Andreas, 97647 Sondheim (DE); Simon-Fuss, Elke, 97653 Bischofsheim (DE); Warmuth, Oliver, 97528 Sulzdorf (DE)

(57) **Zusammenfassung**

Die Erfindung betrifft einen Läufer (4), insbesondere für eine permanentmagneterregte Synchronmaschine, umfassend eine sich in Axialrichtung (A) erstreckende Welle (16) sowie mehrere Pole (14), wobei pro Pol mindestens ein Magnet (12) vorgesehen ist. Eine einfachere und sichere Montage der Magnete (12) des Läufers (4) wird ermöglicht, indem ein Magnetkäfig (2) vorgesehen ist, der mehrere Magnettaschen (10) aufweist, wobei die Magnete (12) der Pole (14) in den Magnettaschen (10) angebracht sind.

## Beschreibung

Die Erfindung betrifft einen Läufer, insbesondere für eine permanentmagneterregte Synchronmaschine, umfassend eine sich in Axialrichtung erstreckende Welle sowie mehrere Pole, wobei pro Pol mindestens ein Magnet vorgesehen ist.

Prinzipiell gibt es zwei Möglichkeiten Läufer (auch Rotoren genannt) für Synchronmaschinen mit permanenterregten Magneten zu bestücken: mit innenliegenden Magneten, bei denen die Magnete in Taschen der Läuferbleche hinein geschoben werden, und mit außenliegenden Magneten, bei denen die Magnete um den Umfang des Läufers fixiert sind. Bei einem Läufer mit außenliegenden Magneten werden die Magnete in der Regel durch einen geeigneten Kleber und/oder durch eine Bandage mit entsprechender Vorspannung an ihrer Position festgehalten.

Im Betrieb der Synchronmaschine bei der Rotation des Läufers sind die Magnete starken Fliehkräften ausgesetzt. Zusätzlich zu den Fliehkräften wirken auf die Magnete Scherkräfte und Tangentialkräfte, die bei einer nicht ausreichenden Fixierung der Magnete ihren Versatz verursachen können.

Um diesen Kräften entgegenzuwirken, werden die Magnete (magnetisiert oder unmagnetisiert; Plättchen oder Schalenmagnete), welche in gestaffelten oder ungestaffelten Magnetpolen angeordnet sind, durch Hilfsmittel wie z.B. doppelseitige Klebebänder oder Flüssigkleber vorfixiert. Anschließend werden die Magnete mit der Bandage gegen die Fliehkraft fixiert. Bei der Montage von magnetisierten Magneten besteht der zusätzliche Aufwand, dass diese so lange gehalten werden müssen, bis der Kleber ausgehärtet ist.

Der Erfindung liegt die Aufgabe zugrunde, eine einfachere und sichere Montage der Magnete eines Läufers zu ermöglichen.

Die Aufgabe wird erfindungsgemäß gelöst durch einen Läufer, insbesondere für eine permanentmagneterregte Synchronmaschine, umfassend eine sich in Axialrichtung erstreckende Welle sowie mehrere Pole, wobei pro Pol mindestens ein Magnet vorgesehen ist, wobei ein Magnetkäfig vorgesehen ist, der mehrere Magnettaschen aufweist und wobei die Magnete der Pole in den Magnettaschen angebracht sind.

Die Aufgabe wird weiterhin erfindungsgemäß gelöst durch einen Magnetkäfig für einen solchen Laufer. Die in Bezug auf den Läufer nachstehend angeführten Vorteile und bevorzugten Ausgestaltungen lassen sich sinngemäß auf den Magnetkäfig übertragen.

Die Erfindung basiert auf der Idee, durch die Verwendung eines Magnetkäfigs die Position der Magnete untereinander vorzugeben. Dabei ist eine positionsgenaue Fixierung von unmagnetisierten oder magnetisierten Magneten beim Aufbau des Läufers relativ einfach möglich. Der Magnetkäfig kann dabei einteilig oder auch zwei- oder mehrteilig ausgeführt sein. Bei der Fertigung des Läufers wird zunächst der zylinderförmige Magnetkäfig direkt um die Welle oder um ein Blechpaket, das auf der Welle angeordnet ist, angebracht. Anschließend werden die Magnete der einzelnen Pole in die Magnettaschen, welche insbesondere Hohlräume darstellen, eingebracht. Der Magnetkäfig weist dabei Trennstege zwischen den einzelnen Magnettaschen auf, so dass insbesondere pro Magnet eine Magnettasche vorgesehen ist.

Im Hinblick auf eine Verbesserung der Läufereigenschaften sind die Magnettaschen vorzugsweise in Axialrichtung zueinander versetzt, so dass eine Staffelung der Pole vorliegt.

Damit die magnetischen Eigenschaften des Läufers nicht beeinträchtigt werden, ist der Magnetkäfig vorteilhafterweise aus einem magnetisch nicht leitenden Material ausgebildet, z.B. Kunststoff, Aluminium, etc.

Gemäß einer bevorzugten Ausführung ist der Magnetkäfig über mindestens eine formschlüssige Verbindung am Läufer fixiert. Zweckdienlicherweise ist die formschlüssige Verbindung über eine Rastnase hergestellt. Die Rastnase greift insbesondere ins Blechpaket oder in die Welle ein. Im Hinblick auf eine Vermeidung von Torsionsneigung weist der Magnetkäfig insbesondere an beiden axialen Enden jeweils mindestens eine Rastnase auf, wodurch die Lage des Magnetkäfigs und folglich auch der Magnete zum Läufer fixiert ist.

Gemäß einer bevorzugten Ausführung ist um den Magnetkäfig eine Bandage umwickelt, welche die Magnete insbesondere gegen Fliehkräfte sichert. Vorteilhafterweise sind dabei ein Bandageanfang und/oder ein Bandageende auf der Welle fixiert, so dass keine zusätzliche Zugkraft in Tangentialrichtung auf den Magnetkäfig einwirkt.

Vorzugsweise sind die Magnete vormagnetisiert. Dies bedeutet, dass beim Aufbau des Läufers bereits magnetisierte Magnete eingesetzt werden. Dadurch entfällt der nachgelagerte Magnetisierungsprozess. Die Montage von magnetisierten Magneten auf Rotoren ist wegen den auftretenden Axial- und Tangentialkräften der Magnete in der Regel sehr problematisch. Durch den Einsatz des Magnetkäfigs, der mit dem Rotor fest verbunden ist, kann die von den Magneten ausgelöste Kraft, die beim Magnetkäfig eine Torsionsneigung hervorruft, kompensiert werden. Ein derartiger Magnetkäfig ermöglicht die Montage von vorab magnetisierten Magneten ohne den zusätzlichen Einsatz von Flüssigkleber. Die Magnete werden in den Magnettaschen positioniert und halten sich durch ihre magnetische Kraft auf der Oberfläche des Rotors bis zum Aufbringen der Bandage.

Ein Ausführungsbeispiel der Erfindung wird anhand einer Zeichnung näher erläutert. Hierin zeigen:
- FIG 1: in einer perspektivischen Darstellung einen Magnetkäfig, und
- FIG 2: in einer perspektivischen Darstellung einen Läufer mit einem solchen Magnetkäfig.

Gleiche Bezugszeichen haben in den verschiedenen Figuren die gleiche Bedeutung.

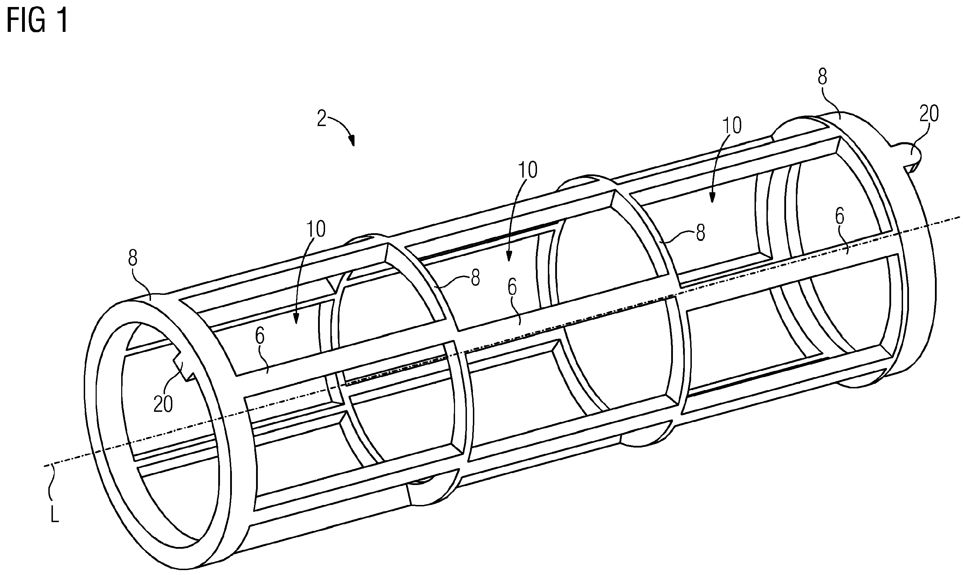

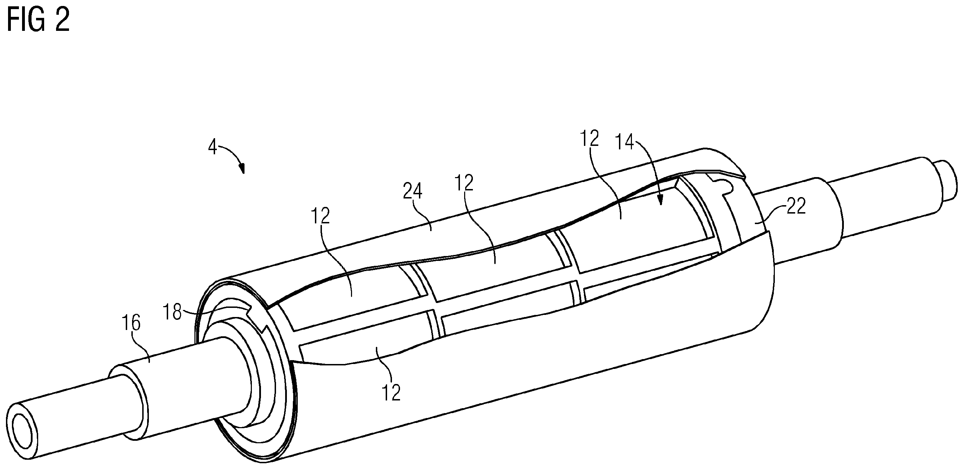

In FIG 1 ist ein Magnetkäfig 2 für einen in FIG 2 dargestellten Läufer oder Rotor 4 gezeigt. Der Magnetkäfig 2 ist zylinderförmig und weist im gezeigten Ausführungsbeispiel mehrere sich in Längsrichtung L erstreckende Trennstege 6 sowie mehrere Umfangsringe 8 auf, welche hohle Magnettaschen 10 begrenzen. Die Magnettaschen 10 sind für die Aufnahme von plättchen- oder schalenförmigen Magneten 12 vorgesehen. In Längsrichtung L betrachtet sind die Magnettaschen 10 leicht zueinander versetzt, so dass die Magnetpole 14, welche durch in Längsrichtung L hintereinander angereihten Magneten 12 gebildet sind, gestaffelt sind. Im gezeigten Ausführungsbeispiel gemäß FIG 1 besteht jeder Pol 14 in Längsrichtung L aus drei Magneten 12 und um den Umfang des Läufers 4 sind fünf gestaffelte Pole 14 angeordnet.

Der Magnetkäfig 2 besteht aus einem magnetisch nicht leitenden Material und dient zum Fixieren der Magnete 12 auf dem Läufer 4. Dies ist aus FIG 2 ersichtlich. Der Läufer 4 ist insbesondere für den Einsatz in eine hier nicht näher gezeigte permanentmagneterregte Synchronmaschine vorgesehen und umfasst ein auf einer sich in Axialrichtung A erstreckenden Welle 16 angeordnetes Blechpaket 18. Beim Aufbauen des Rotors 4 wird zunächst der Magnetkäfig 2 auf das Blechpaket 18 aufgebracht, so dass die Längsrichtung L des Magnetkäfigs 2 mit der Axialrichtung A des Läufers 4 zusammen fällt. Der Magnetkäfig 2 weist dabei an seiner Stirnseite jeweils eine Rastnase 20 auf, mit deren Hilfe eine formschlüssige Verbindung mit dem Blechpaket 18 oder einer Endscheibe 22 hergestellt wird, so dass der Magnetkäfig 2 positionsfest ist und sich nicht verschieben kann.

Alternativ ist es auch möglich auf das Blechpaket 18 zu verzichten, wobei der Magnetkäfig 2 und die Magnetpole 14 direkt auf der Welle 16 positioniert werden. Bei einer solchen Ausführung greifen die Rastnasen 20 des Magnetkäfigs 2 in die Welle 16 ein.

Anschließend werden die Magnete 12, welche insbesondere bereits magnetisiert sind, in die Magnettaschen 10 hineingeschoben. Dank des Magnetkäfigs 2 sind dabei keine Klebemittel zum Fixieren der Magnete 12 erforderlich.

Schließlich wird der Magnetkäfig 2 mit den Magneten 12 mittels einer Bandage 24 bandagiert. Dabei werden ein Bandageanfang bzw. ein Bandageende auf der Welle 16 fixiert, so dass keine Zugkraft in Tangentialrichtung auf den Magnetkäfig 2 wirkt.

## Patentansprüche

1. Läufer (4), insbesondere für eine permanentmagneterregte Synchronmaschine, umfassend eine sich in Axialrichtung (A) erstreckende Welle (16) sowie mehrere Pole (14), wobei pro Pol mindestens ein Magnet (12) vorgesehen ist,
**dadurch gekennzeichnet, dass** ein Magnetkäfig (2) vorgesehen ist, der mehrere Magnettaschen (10) aufweist, wobei die Magnete (12) der Pole (14) in den Magnettaschen (10) angebracht sind.

2. Läufer (4) nach Anspruch 1,
**dadurch gekennzeichnet, dass** die Magnettaschen (10) in Axialrichtung (A) zueinander versetzt sind.

3. Läufer (4) nach einem der vorhergehenden Ansprüche,
**dadurch gekennzeichnet, dass** der Magnetkäfig (2) aus einem magnetisch nicht leitenden Material ausgebildet ist.

4. Läufer (4) nach einem der vorhergehenden Ansprüche,
**dadurch gekennzeichnet, dass** der Magnetkäfig (2) über mindestens eine formschlüssige Verbindung fixiert ist.

5. Läufer (4) nach Anspruch 4,
**dadurch gekennzeichnet, dass** die formschlüssige Verbindung über eine Rastnase (20) hergestellt ist.

6. Läufer (4) nach einem der vorhergehenden Ansprüche,
**dadurch gekennzeichnet, dass** um den Magnetkäfig (2) eine Bandage (24) umwickelt ist.

7. Läufer (4) nach Anspruch 6,
**dadurch gekennzeichnet, dass** ein Bandageanfang und/oder ein Bandageende auf der Welle (16) fixiert ist.

8. Läufer (4) nach einem der vorhergehenden Ansprüche,
**dadurch gekennzeichnet, dass** die Magnete (12) vormagnetisiert sind.

9. Magnetkäfig (2) für einen Laufer (4) nach einem der vorhergehenden Ansprüche.
